# EUROPÄISCHE PATENTANMELDUNG

(11) **EP 1 066 943 A1**
(43) Veröffentlichungstag der Anmeldung: **10.01.2001**
(21) Anmeldenummer: 00890209.0
(22) Anmeldetag: 03.07.2000
(51) Int. Cl.: B29C 44/38

(54) **Verfahren zum Ausschäumen eines stangenförmigen Hohlprofiles, insbesondere für Fenster oder Türen**

(30) Priorität: 08.07.1999 AT 118699
(71) Anmelder: INTERNORM FENSTER AKTIENGESELLSCHAFT, A-4050 Traun (AT)
(72) Erfinder: König, Engelbert, Ing., 4531 Piberbach 27 (AT)
(74) Vertreter: Hübscher, Heiner, Dipl.-Ing.

(57) **Zusammenfassung**

Es wird ein Verfahren zum Ausschäumen eines stangenförmigen Hohlprofiles (1), insbesondere Fenster oder Türen, beschrieben, wobei ein Kunststoff-Treibmittelgemisch (6) in axialer Richtung in den auszuschäumenden Profilhohlraum (2) gefördert wird, bevor der Profilhohlraum (2) vollständig durch das eingebrachte Kunststoff-Treibmittelgemisch (6) ausgeschäumt wird. Um vorteilhafte Verfahrensbedingungen zu schaffen, wird vorgeschlagen, daß das Kunststoff-Treibmittelgemisch (6) auf eine Trägerbahn (4) aufgebracht und mit der anschließend im Profilhohlraum (2) verbleibenden Trägerbahn (4) in den Profilhohlraum gefördert wird.

## Beschreibung

Die Erfindung bezieht sich auf ein Verfahren zum Ausschäumen eines stangenförmigen Hohlprofiles, insbesondere für Fenster oder Türen, wobei ein Kunststoff-Treibmittelgemisch in axialer Richtung in den auszuschäumenden Profilhohlraum gefördert wird, bevor der Profilhohlraum vollständig durch das eingebrachte Kunststoff-Treibmittelgemisch ausgeschäumt wird.

Um vor allem die Wärmedämmeigenschaften von Stock- und Flügelrahmen von Fenstern oder Türen zu verbessern, werden die zur Fertigung dieser Rahmen eingesetzten, stangenförmigen Hohlprofile mit Kunststoff, vorzugsweise auf Polyurethanbasis, ausgeschäumt. Das Ausschäumen vergleichsweise langer Profilstangen bringt jedoch Schwierigkeiten mit sich, wenn ein Schaumkern gefordert wird, der über seine Länge weitgehend gleichbleibende Eigenschaften aufweisen soll. Wird nämlich die für das Ausschäumen des Hohlprofiles vorgesehene Kunststoff-Treibmittelmischung unter einem entsprechenden Druck in den Profilhohlraum eingebracht, so ändern sich die für den Schäumvorgang maßgeblichen Verhältnisse in Abhängigkeit vom Abstand zur Einfüllstelle des Kunststoff-Treibmittelgemisches in den Profilhohlraum, weil beispielsweise der Fülldruck mit zunehmender Entfernung abnimmt. Um neben der ungleichmäßigen Druckverteilung nicht auch eine ungleichmäßige Temperaturverteilung in Kauf nehmen zu müssen, werden die auszuschäumenden Hohlprofile erwärmt, was bei Kunststoffprofilen zu Festigkeitsverlusten führt, die die Gefahr einer Profilverformung mit sich bringen, insbesondere bei der mit dem Ausschäumen verbundenen Druckbelastung. Aus diesem Grunde werden entweder aufwendige Versteifungen des Hohlprofils oder äußere Profilabstützungen notwendig. Trotz dieser Maßnahmen kann jedoch keine gleichmäßige Ausschäumung der Hohlprofile gewährleistet werden. Eine gleichmäßiges Ausschäumen ist lediglich durch ein druckloses Einbringen des Kunststoff-Treibmittelgemisches in den Profilhohlraum möglich, was nach dem Stand der Technik den Einsatz von Lanzen erfordert, durch die das Kunststoff-Treibmittelgemisch in den Profilhohlraum gefördert wird. Da die Austrittsgeschwindigkeit des Kunststoff-Treibmittelgemisches aus der Förderlanze an jene Geschwindigkeit angepaßt wird, mit der die Förderlanze durch den Profilhohlraum in axialer Richtung gezogen wird, kann eine über die Profillänge gleichbleibende Menge an Kunststoff-Treibmittelgemisch in den Profilhohlraum eingebracht werden, und zwar in Abstimmung auf den auszuschäumenden Hohlraumquerschnitt, so daß der Profilhohlraum maßhaltig ausgeschäumt werden kann, ohne eine übermäßige Druckbelastung befürchten zu müssen, was die sonst erforderlichen Aussteifungs- bzw. Abstützmaßnahmen für das Hohlprofil überflüssig macht. Nachteilig bei einer solchen Einbringung des Kunststoff-Treibmittelgemisches ist allerdings, daß das Bereitstellen ausreichend langer, an eine Mischkammer für das Kunststoff-Treibmittelgemisch angeschlossener Förderlanzen mit dem für die Lanzenbewegung durch das auszuschäumende Hohlprofil erforderlichen Lanzenantrieb aufwendig ist. Außerdem ist das Hohlprofil auf die vorgesehene Reaktionstemperatur für das Kunststoff-Treibmittelgemisch zu erwärmen, wenn nicht eine Abkühlung der über die Förderlanze in den Profilhohlraum abgelegten Gemischraupe über die sie aufnehmende Profilwand in Kauf genommen werden soll.

Der Erfindung liegt somit die Aufgabe zugrunde, ein Verfahren zum Ausschäumen eines stangenförmigen Hohlprofiles, insbesondere für Stock- und Flügelrahmen von Fenstern oder Türen, der eingangs geschilderten Art so auszugestalten, daß das Kunststoff-Treibmittelgemisch in einfacher Weise in einer gleichmäßigen Verteilung drucklos in den auszuschäumenden Profilhohlraum des Hohlprofiles eingebracht werden kann, um eine gleichmäßige Füllung des Hohlprofiles mit Schaumstoff und damit über die Länge des Hohlprofiles gleichmäßige Wärmedämmeigenschaften sicherzustellen.

Die Erfindung löst die gestellte Aufgabe dadurch, daß das Kunststoff-Treibmittelgemisch auf eine Trägerbahn aufgebracht und mit der anschließend im Profilhohlraum verbleibenden Trägerbahn in den Profilhohlraum gefördert wird.

Da zufolge dieser Maßnahme das Kunststoff-Treibmittelgemisch außerhalb des stangenförmigen Hohlprofiles aus einer Mischkammer unmittelbar auf eine Trägerbahn aufgebracht werden kann, die in axialer Richtung in den Profilhohlraum gefördert wird und in diesem Profilhohlraum verbleibt, ergibt sich eine einfache, wenig aufwendige Möglichkeit, das Kunststoff-Treibmittelgemisch dosiert und ohne Druckanwendung in den auszuschäumenden Profilhohlraum einzubringen. Die der Trägerbahn zugeführte, auf eine Längeneinheit der Trägerbahn bezogene Menge an Kunststoff-Treibmittelgemisch ist entsprechend dem Schaumstoffbedarf für eine Längeneinheit des Profilhohlraumes einzustellen, um ein gleichmäßiges Ausschäumen des Profilhohlraumes über die Länge des Hohlprofiles zu erreichen. Es muß lediglich dafür gesorgt werden, daß während des Einfahrens der Trägerbahn in den Profilhohlraum der Schäumvorgang nicht zu einem Anlegen des entstehenden Schaumstoffes an den Profilwänden führt, was durch eine Wahl der Fördergeschwindigkeit für die Trägerbahn in Abhängigkeit von der einstellbaren Reaktionszeit des Kunststoff-Treibmittelgemisches einfach sichergestellt werden kann.

Die Förderung der Trägerbahn durch den Profilhohlraum läßt sich in besonders einfacher Weise dadurch bewerkstelligen, daß die Trägerbahn entlang eines einen Gleitboden für das Bahnprofil bildenden Abschnittes des Profilhohlraumes in diesen eingeschoben wird, so daß sich zusätzliche Führungsmaßnahmen für die Trägerbahn innerhalb des Profilhohlraumes erübrigen.

Da beim Anlegen des entstehenden Schaumstoffes an die Profilwände der Schäumvorgang zumindest im Bereich dieser Wandanlage als abgeschlossen gelten kann, bedarf es keiner aufwendigen Erwärmung des auszuschäumenden Hohlprofiles auf die vorgesehene Reaktionstemperatur des Kunststoff-Treibmittelgemisches. Es genügt vielmehr, die Trägerbahn vor dem Aufbringen des Kunststoff-Treibmittelgemisches zu erwärmen, falls eine Abkühlung des Kunststoff-Treibmittelgemisches im Bereich der Trägerbahn nicht in Kauf genommen wird.

Das Einbringen des Kunststoff-Treibmittelgemisches in den Profilhohlraum mit Hilfe einer Trägerbahn erlaubt außerdem, die Ausschäumung des Profilhohlraumes auf einen Querschnittsabschnitt zu beschränken. Zu diesem Zweck wird der Profilhohlraum durch die Trägerbahn in wenigstens zwei Kammern unterteilt, von denen nur eine durch ein Aufbringen eines Kunststoff-Treibmittelgemisches auf einen dieser Kammer zugehörigen Trägerbahnabschnitt ausgeschäumt wird. Die nicht ausgeschäumte Kammer des Profilhohlraumes kann dann beispielsweise zum Einsetzen einer Profilversteifung herangezogen werden.

Da das Kunststoff-Treibmittelgemisch beim Austreten aus einer Mischkammer eine ausgeprägte flüssige Phase bildet, besteht außerdem die Gefahr, daß das Kunststoff-Treibmittelgemisch während der Trägerbahnförderung von der Trägerbahn seitlich abfließt. Um ein solches ein gleichmäßiges Ausschäumen des Profilhohlraumes beeinträchtigendes Abfließen des Kunststoff-Treibmittelgemisches von der Trägerbahn ausschließen zu können, kann die Trägerbahn ein rinnenförmiges Bahnprofil bilden, das die auf die Trägerbahn aufgebrachte Gemischraupe aufnimmt. Die sich durch die Rinnenform ergebenden, hochgezogenen Längsränder des Bahnprofils bringen außerdem eine vorteilhafte Führung der Trägerbahn innerhalb des auszuschäumenden Profilhohlraumes mit sich, wenn die Breite des Bahnprofils der Breite des einen Gleitboden für das Bahnprofil bildenden Abschnittes des Profilhohlraumes entspricht.

Das Vorsehen einer Trägerbahn, die nach dem Einbringen des Kunststoff-Treibmittelgemisches in den Profilhohlraum in diesem verbleibt, bildet nicht nur eine vorteilhafte Voraussetzung für ein einfaches Einbringen des Kunststoff-Treibmittelgemisches in den Profilhohlraum, sondern eröffnet auch die Möglichkeit, das Hohlprofil durch die Trägerbahn auszusteifen, wenn das Bahnprofil beispielsweise aufgrund einer besonderen Ausbildung oder Werkstoffwahl eine Versteifung für das auszuschäumende Hohlprofil bildet.

Soll der Profilhohlraum nur in einem Querschnittsabschnitt ausgeschäumt werden, so kann die Unterteilung des Profilhohlraumes in einfacher Weise durch eine Trägerbahn erreicht werden, bei der das Bahnprofil einen den Profilhohlraum unterteilenden, vorzugsweise in einer Nut des Hohlprofiles führbaren Längssteg aufweist. Ist dieser Längssteg auf der der auszuschäumenden Kammer des Profilhohlraumes abgekehrten Seite mit einer Wärmestrahlungen reflektierenden Beschichtung versehen, so können besonders günstige Bedingungen für die Wärmedämmeigenschaften des Hohlprofiles erreicht werden.

Anhand der Zeichnung wird das erfindungsgemäße Verfahren näher erläutert. Es zeigen
- Fig. 1: eine Vorrichtung zur Durchführung des Verfahrens in einem schematischen Längsschnitt und
- Fig. 2: ein nach dem erfindungsgemäßen Verfahren ausgeschäumtes Hohlprofil in einem Querschnitt.

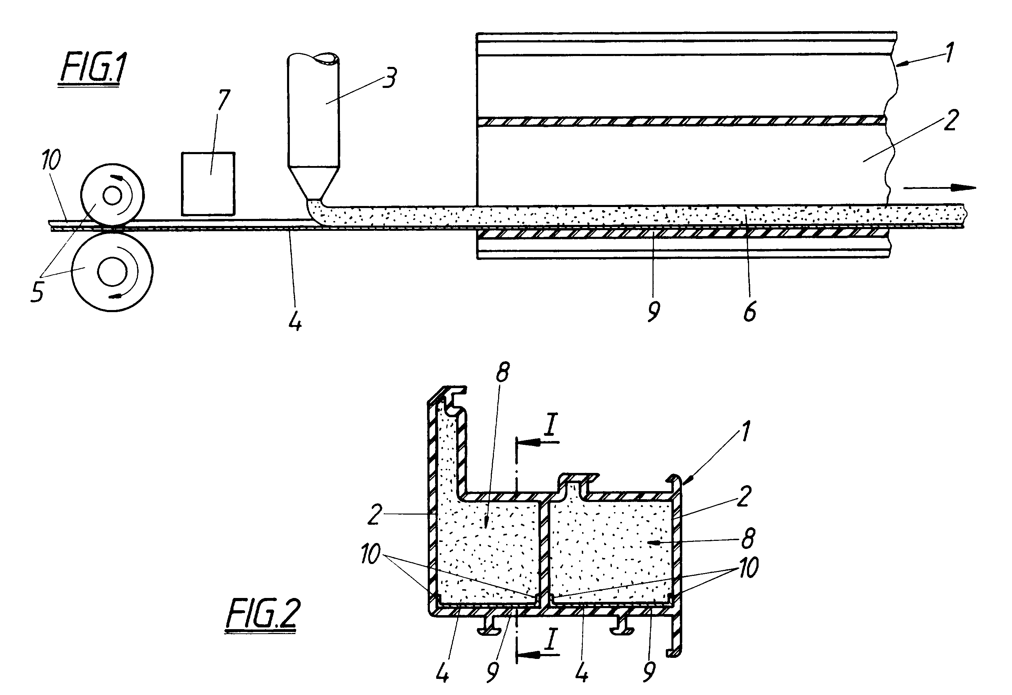

Gemäß dem dargestellten Ausführungsbeispiel weist das auszuschäumende Hohlprofil 1 aus Kunststoff zwei voneinander getrennte Profilhohlräume 2 auf, die mit Kunststoff ausgeschäumt werden. Zu diesem Zweck werden die insbesondere durch den eingesetzten Kunststoff und das verwendete Treibmittel sowie übliche Zuschläge bestehenden Komponenten in einer Mischkammer 3 innig vermischt und auf eine Trägerbahn 4 aufgebracht, die mit Hilfe von Treibrollen 5 in axialer Richtung durch einen der beiden Profilhohlräume 2 gefördert wird, um das in Raupenform auf die Trägerbahn 4 aufgebrauchte Kunststoff-Treibmittelgemisch 6 über die volle Länge des Hohlprofiles 1 in den Profilhohlraum 2 einzubringen. Das Kunststoff-Treibmittelgemisch 6 ist in Abhängigkeit von der Fördergeschwindigkeit der Trägerbahn 4 so eingestellt, daß es ohne Behinderung durch den einsetzenden Schäumvorgang in den Profilhohlraum 2 eingebracht werden kann. Erst nach dem vollständigen Einschieben der Trägerbahn 4 in das Hohlprofil 1 wird das Treibrollenpaar 5 abgestellt, um einen gleichmäßigen Schäumvorgang über die Hohlprofillänge sicherzustellen. Da die auf eine Längeneinheit bezogene Menge des Kunststoff-Treibmittelgemisches 6 genau auf den Hohlraumquerschnitt abgestimmt werden kann, kann eine übermäßige, durch den Schäumvorgang bedingte Druckbelastung des Hohlprofiles 1 ausgeschlossen werden, so daß sonst übliche Versteifungs- bzw. Stützmaßnahmen für das auszuschäumende Hohlprofil 1 überflüssig werden, zumal auch keine Notwendigkeit besteht, das Hohlprofil 1 auf die Reaktionstemperatur des Kunststoff-Treibmittelgemisches 6 zu erwärmen. Um im Bereich der Trägerbahn 4 eine Abkühlung des aus der Mischkammer 3 austretenden Kunststoff-Treibmittelgemisches 6 zu unterbinden, kann die Trägerbahn 4 entsprechend erwärmt werden, was in einfacher Weise beispielsweise über eine Infrarotheizung 7 durchgeführt werden kann. Nach dem vollständigen Aufschäumen des Kunststoff-Treibmittelgemisches 6 ist der Profilhohlraum 2 maßhaltig mit einem Schaumstoff 8 ausgefüllt, wie dies der Fig. 2 entnommen werden kann. Die Trägerbahn 4 verbleibt im Profilhohlraum 2 und wird im Profilhohlraum 2 durch den Schaumstoff 8 festgehalten. Der andere Profilhohlraum 2 kann anschließend in ähnlicher Weise mit einem Kunststoff-Treibmittelgemisch 6 beschickt werden, wobei allerdings die Trägerbahn 4 auf die unterschiedlichen Querschnittsabmessungen dieses Profilhohlraumes 2 abgestellt sein muß. Es ist aber auch möglich, diesen anderen Profilhohlraum 2 unausgeschäumt zu belassen, um beispielsweise diesen Profilhohlraum 2 zur Aufnahme einer Aussteifung zu nützen.

Solche Aussteifungen können auch bei Hohlprofilen 1 mit nur einem Profilhohlraum 2 eingesetzt werden, wenn nur ein Teil des Querschnittes des Profilhohlraumes 2 ausgeschäumt wird. Zu diesem Zweck kann die Trägerbahn 4 einen den Profilhohlraum 2 in zwei Kammern unterteilenden Längssteg aufweisen, der z. B. die in der Fig. 2 eingezeichnete Trennwand zwischen den beiden Profilhohlräumen 2 ersetzt, so daß beim Ausschäumen nur einer der durch den Längssteg voneinander getrennten, dann den in der Fig. 2 eingezeichneten Profilhohlräumen 2 entsprechenden Kammern die nicht ausgeschäumte Kammer in analoger Weise zur Aufnahme einer Aussteifung dienen kann.

Wie insbesondere der Fig. 2 entnommen werden kann, bildet das Hohlprofil 1 für die Trägerbahnen 4 jeweils einen Gleitboden 9, entlang dessen die Trägerbahnen 4 in die Profilhohlräume 2 eingeschoben werden. Die Trägerbahnen 4 bilden dabei mit ihren hochgezogenen Längsrändern 10 ein rinnenförmiges Bahnprofil, das einerseits ein seitliches Abfließen des Kunststoff-Treibmittelgemisches 6 von der Trägerbahn 4 während des Einschiebens der Trägerbahn 4 in das Hohlprofil 1 verhindert und anderseits eine vorteilhafte Seitenführung des Bahnprofiles im Profilhohlraum 2 darstellt. Die in den Profilhohlräumen 2 verbleibenden Trägerbahnen 4, können im Bedarfsfall auch vorteilhaft als Profilaussteifung dienen.

## Patentansprüche

1. Verfahren zum Ausschäumen eines stangenförmigen Hohlprofiles, insbesondere für Fenster oder Türen, wobei ein Kunststoff-Treibmittelgemisch in axialer Richtung in den auszuschäumenden Profilhohlraum gefördert wird, bevor der Profilhohlraum vollständig durch das eingebrachte Kunststoff-Treibmittelgemisch ausgeschäumt wird, dadurch gekennzeichnet, daß das Kunststoff-Treibmittelgemisch auf eine Trägerbahn aufgebracht und mit der anschließend im Profilhohlraum verbleibenden Trägerbahn in den Profilhohlraum gefördert wird.

2. Verfahren nach Anspruch 1, dadurch gekennzeichnet, daß die Trägerbahn entlang eines einen Gleitboden für das Bahnprofil bildenden Abschnittes des Profilhohlraumes in diesen eingeschoben wird.

3. Verfahren nach Anspruch 1 oder 2, dadurch gekennzeichnet, daß die Trägerbahn vor dem Aufbringen des Kunststoff-Treibmittelgemisches erwärmt wird.

4. Verfahren nach einem der Ansprüche 1 bis 3, dadurch gekennzeichnet, daß der Profilhohlraum durch die Trägerbahn in wenigstens zwei Kammern unterteilt wird, von denen nur eine durch ein Aufbringen eines Kunststoff-Treibmittelgemisches auf einen dieser Kammer zugehörigen Trägerbahnabschnitt ausgeschäumt wird.

5. Trägerbahn zum Durchführen des Verfahrens nach einem der Ansprüche 1 bis 4, gekennzeichnet durch ein rinnenförmiges Bahnprofil, dessen Breite vorzugsweise der Breite des einen Gleitboden (9) für das Bahnprofil bildenden Abschnittes des Profilhohlraumes (2) entspricht.

6. Trägerbahn nach Anspruch 5, dadurch gekennzeichnet, daß das Bahnprofil als Versteifung für das auszuschäumende Hohlprofil (1) ausgebildet ist.

7. Trägerbahn zur Durchführung des Verfahrens nach Anspruch 4, dadurch gekennzeichnet, daß das Bahnprofil einen den Profilhohlraum (2) unterteilenden, vorzugsweise in einer Nut des Hohlprofiles (1) führbaren Längssteg aufweist.

8. Trägerbahn nach Anspruch 7, dadurch gekennzeichnet, daß der Längssteg auf der der auszuschäumenden Kammer des Profilhohlraumes (2) abgekehrten Seite eine Wärmestrahlungen reflektierende Beschichtung aufweist.
